(19) Europäisches Patentamt
European Patent Office
Office européen des brevets

(11) Veröffentlichungsnummer: **0 328 983**
**A1**

# (12) EUROPÄISCHE PATENTANMELDUNG

(21) Anmeldenummer: **89102010.9**

(51) Int. Cl.4: **H01B 1/12 , //C08L45:00**

(22) Anmeldetag: **06.02.89**

Patentansprüche für folgende Vertragsstaaten: ES + GR.

(30) Priorität: **13.02.88 DE 3804523**

(43) Veröffentlichungstag der Anmeldung: **23.08.89 Patentblatt 89/34**

(84) Benannte Vertragsstaaten: **AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Feldhues, Michael, Dr.**
**Königsteiner Strasse 1a**
**D-6232 Bad Soden am Taunus(DE)**
Erfinder: **Kämpf, Günther, Dr.**
**Rebhangstrasse 3**
**D-6227 Oestrich-Winkel(DE)**
Erfinder: **Mecklenburg, Thomas, Dr.**
**Freiherr-vom-Stein-Strasse 20**
**D-6308 Butzbach(DE)**

## (54) Elektrisch leitende Polymere mit verbesserter Löslichkeit.

(57) Die Erfindung betrifft intrinsisch elektrisch leitende Polymere, die auch in der oxidierten Form in üblichen organischen Lösemitteln bei Raumtemperatur vollständig löslich sind, und die Struktureinheiten enthalten, welche sich von mindestens einem Monomeren der Formel (I) ableiten

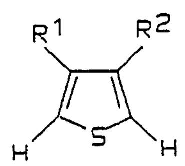

(I),

worin $R^1$ eine $C_6$-$C_{30}$-Alkoxygruppe und $R^2$ ein Wasserstoffatom oder eine $C_1$-$C_{30}$-Alkoxygruppe darstellen. Weiterhin bezieht sich die Erfindung auf ein Verfahren zur Herstellung dieser Polymeren durch oxidative Polymerisation von mindestens einem Monomeren dieser Formel (I). Die erfindungsgemäßen Polymeren sind insbesondere für Beschichtungszwecke gut einsetzbar.

EP 0 328 983 A1

## Elektrisch leitende Polymere mit verbesserter Löslichkeit

Es ist bekannt, daß sich Heteroaromaten oxidativ, beispielsweise durch anodische Oxidation, polymerisieren lassen und dabei elektrisch leitende Polymere bilden, die für die Elektrotechnik, bei Halbleiterbauelementen, Schaltern, Abschirmmaterialien, Solarzellen und als Elektrodenmaterial bei elektrochemischen Synthesen und in reversiblen Ladungsspeichern Interesse besitzen (vgl. z.B. IBM J. Res. Develop. 27, 330 (1983)).

Der entscheidende Nachteil der meisten bisher bekannten leitenden Polymeren besteht darin, daß sie nicht schmelzbar, nicht thermoplastisch verarbeitbar und mit wenigen Ausnahmen nicht in einem der üblichen organischen Lösemittel löslich sind.

Die wenigen im dotierten Zustand teilweise löslichen, elektrisch leitenden Polymeren befriedigen hinsichtlich ihrer Löslichkeit, der Langzeitstabilität der elektrischen Leitfähigkeit, der thermischen Beständigkeit und der Filmbildeeigenschaften noch nicht (vgl. J. Chem. Soc., Chem. Commun. 1985, 90 und Synthetic Metals 15, 169 (1986)).

Schließlich sind auch Lösungen von elektrisch leitenden Polymeren substituierter Thiophene bekannt, welche durch einen chemischen Dotiervorgang der gelösten neutralen (undotierten) Polymeren hergestellt wurden (vgl. EP-A 203 438). Diese Lösungen besitzen jedoch den Nachteil, daß daraus hergestellte leitfähige Artikel zwangsläufig durch Dotiermittel oder deren Reaktionsprodukte verunreinigt sind und Beeinträchtigungen bei den vorgesehenen Anwendungen auftreten können.

Es wurden auch schon lösliche, elektrisch leitende Polymere vorgeschlagen, welche schon weitgehend die genannten Anforderungen erfüllen (vgl EP-A 257 573) Die dort beschriebenen dipolar aprotischen Lösemittel sind allerdings für einige der vorgesehenen Anwendungen weniger gut geeignet.

Aufgabe der vorliegenden Erfindung war es daher, ein elektrisch leitendes Material in reiner Form bereitzustellen, das zumindest in einigen der üblichen organischen Solventien homogen löslich ist, gute Filmbildeeigenschaften und eine hohe thermische Beständigkeit besitzt.

Die Erfindung betrifft somit ein intrinsisch elektrisch leitendes Polymeres in der neutralen (nicht leitenden) und oxidierten (dotierten) Form, mit Struktureinheiten, die durch Verknüpfung in 2-Stellung und/oder 5-Stellung miteinander verbunden sind, im statistischen Mittel bestehend aus

60 bis 100 mol-% Struktureinheiten, die sich von mindestens einem Monomeren der Formel (I) ableiten

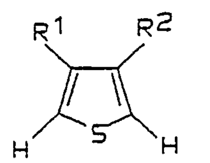

(I),

worin

$R^1$ eine geradkettige oder verzweigte $C_6$-$C_{30}$-Alkoxygruppe und

$R^2$ ein Wasserstoffatom oder eine $C_1$-$C_{30}$-Alkoxygruppe darstellen,

0 bis 40 mol-% Struktureinheiten, die sich von mindestens einem Monomeren der Formel (II) ableiten

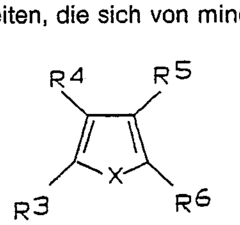

(II),

worin

$R^4$ und $R^5$ unabhängig voneinander ein Wasserstoffatom, ein Halogenatom, eine $C_1$-$C_{12}$-Alkylgruppe, Alkoxyalkyl, Arylmethyl, Aryl, eine $C_1$-$C_4$-Alkoxygruppe oder $O(CH_2CH_2O)_nCH_3$ mit $n = 1$ bis 4, bedeuten oder zusammen mit den sie verbindenden C-Atomen einen aromatischen Ring bilden,

$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C Atomen jeweils einen aromatischen Ring bilden,

X ein Sauerstoffatom, ein Schwefelatom, eine NH-Gruppe, eine N-Alkylgruppe oder eine N-Arylgruppe

bedeutet,
0 bis 40 mol-% Struktureinheiten, die sich von mindestens einem Monomeren der Formel (III) ableiten

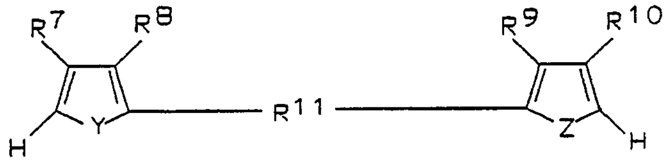

(III),

worin
$R^7$, $R^8$, $R^9$ und $R^{10}$ unabhängig voneinander ein Wasserstoffatom, eine $C_1$-$C_{12}$-Alkylgruppe, eine Arylgruppe oder eine $C_1$-$C_{30}$-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
$R^{11}$ eine Arylengruppe, eine Heteroarylengruppe oder ein konjugiertes System der Formel $(\text{-CH=CH-})_p$, worin p null, 1, 2 oder 3 ist, bedeutet,
0 bis 40 mol-% Struktureinheiten, die sich von mindestens einer Verbindung der Formel (IV) ableiten

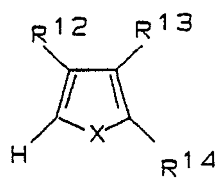

(IV)

worin
$R^{12}$ und $R^{13}$ unabhängig voneinander ein Wasserstoffatom, ein Halogenatom, eine $C_1$-$C_{12}$-Alkylgruppe, eine $C_1$-$C_{30}$-Alkoxygruppe, eine $C_1$-$C_{12}$-Acylaminogruppe oder eine $C_1$-$C_{12}$-Acyloxygruppe,
$R^{14}$ ein Halogenatom, eine $C_1$-$C_{12}$-Alkylgruppe, eine $C_1$-$C_{30}$-Alkoxygruppe, eine $C_1$-$C_{12}$-Acylaminogruppe, eine $C_1$-$C_{12}$-Acylgruppe oder eine $C_1$-$C_{12}$-Acyloxygruppe bedeuten und
X die oben angegebene Bedeutung hat.

Weiterhin betrifft die Erfindung ein Verfahren zur Herstellung des intrinsisch elektrisch leitenden Polymeren durch oxidative chemische oder elektrochemische Polymerisation von mindestens einem Monomeren der Formel (I), gegebenenfalls zusammen mit einem oder mehreren Comonomeren der Formeln (II), (III) oder (IV).

Die erfindungsgemäßen Polymeren enthalten Struktureinheiten, welche sich durch Verknüpfung in 2-Stellung und/oder 5-Stellung von mindestens einem Monomeren der nachstehenden Formel (I) ableiten

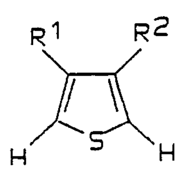

(I),

$R^1$ ist eine geradkettige oder verzweigte $C_6$-$C_{30}$-, vorzugsweise $C_8$-$C_{22}$- und insbesondere $C_{10}$-$C_{16}$-Alkoxygruppe. $R^2$ ist insbesondere ein Wasserstoffatom oder eine $C_1$-$C_{30}$-, vorzugsweise $C_1$-$C_{22}$- und insbesondere $C_6$-$C_{12}$-Alkoxygruppe.

Beispiele für Vertreter der Formel (I) sind 3-Hexyloxythiophen, 3-Heptyloxythiophen, 3-Octyloxythiophen, 3-Nonyloxythiophen, 3-Decyloxythiophen, 3-Undecyloxythiophen, 3-Dodecyloxythiophen, 3-Tetradecyloxythiophen, 3-Pentadecyloxythiophen, 3-Hexadecyloxythiophen, 3-Octadecyloxythiophen, 3-Eicosyloxythiophen, 3-Docosyloxythiophen, 3-(2′-Ethylhexyloxy)thiophen, 3-(2′,4′,4′-Trimethylpentyloxy) thiophen, 3,4-Dihexyloxythiophen, 3,4-Dioctyloxythiophen, 3,4-Dinonyloxythiophen, 3,4-Didodecyloxythiophen, 3-Methoxy-4-pentyloxythiophen, 3-Hexyloxy-4-methoxythiophen, 3-Methoxy-4-nonyloxythiophen, 3-Dodecyloxy-4-methoxythiophen, 3-Docosyloxy-4-methoxythiophen, 3-Ethoxy-4-pentyloxythiophen, 3-Ethoxy-4-hexyloxythiophen, 3-Butoxy-4-dodecyloxythiophen, 3-(2′-Ethylhexyloxy)-4-methoxythiophen.

Die erfindungsgemäßen Polymeren enthalten vorzugsweise 8 bis 150, insbesondere 11 bis 100

Struktureinheiten. Die Menge der Struktureinheiten, die sich von mindestens einem Monomeren der Formel (I) ableiten, beträgt im statistischen Mittel 60 bis 100 mol-%, vorzugsweise 90 bis 100 mol-% und insbesondere 95 bis 100 mol-%, bezogen auf die im undotierten Polymeren vorhandenen Struktureinheiten.

Als Comonomere für die Monomeren der Formel (I) kommen vorzugsweise die Monomeren der Formeln (II), (III) und (IV) in Frage.

Beispielsweise seien hier genannt Verbindungen der Formel (II)

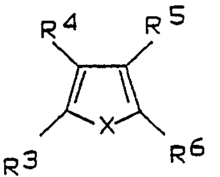

(II),

$R^4$ und $R^5$ sind unabhängig voneinander ein Wasserstoffatom, ein Halogenatom, eine $C_1$-$C_{12}$-, vorzugsweise $C_1$-$C_4$-Alkylgruppe, eine Alkoxyalkylgruppe, vorzugsweise Alkoxymethyl, eine Arylmethylgruppe, vorzugsweise Benzyl oder Thienylmethyl, eine Arylgruppe, vorzugsweise Phenyl oder Thienyl, eine $C_1$-$C_4$-, vorzugsweise $C_1$-$C_2$-Alkoxygruppe oder $-O(CH_2CH_2O)_nCH_3$ mit n = 1 bis 4, vorzugsweise 1 oder 2 oder bilden zusammen mit den sie verbindenden C-Atomen einen aromatischen Ring, vorzugsweise einen Benzol-, Thiophen- oder Pyrrolring.

$R^3$ und $R^6$ sind unabhängig voneinander ein Wasserstoffatom oder bilden jeweils mit $R^4$ oder $R^5$ zusammen mit den sie verbindenden C-Atomen einen aromatischen Ring, vorzugsweise einen Benzol-, Thiophen- oder Pyrrolring.

X bedeutet ein Sauerstoffatom, ein Schwefelatom, eine NH-Gruppe, eine N-Alkylgruppe, vorzugsweise N-$C_1$-$C_4$-Alkyl, oder eine N-Arylgruppe, vorzugsweise N-Phenyl.

Geeignet sind Pyrrol, 3-Chlorpyrrol, 3-Methylpyrrol, 3,4-Dimethylpyrrol, N-Methylpyrrol, Thieno|3,2-b]-pyrrol, Carbazol, Thiophen, 3-Methylthiophen, 3-Octylthiophen, 3,4-Dimethylthiophen, 3,4 Diethylthiophen, 3-(Methoxyethoxymethyl)thiophen, 3-(Methoxyethoxyethoxymethyl)thiophen, 3-Methoxythiophen, 3-Ethoxythiophen, 3-Propoxythiophen, 3-Butoxythiophen, 3-(Methoxyethoxy)thiophen, 3-(Methoxyethoxyethoxy)-thiophen, 3-Methoxy-4-methylthiophen, 3-Ethoxy-4-methylthiophen, 3-Butoxy-4-methylthiophen, 3-Ethyl-4-methoxythiophen, 3-Butyl-4-methoxythiophen, 3-Dodecyl-4-methoxythiophen, 3,4-Dimethoxythiophen und Thieno[2,3-b]-thiophen, Dithieno [3,2-b;2′,3′-d] thiophen, Dibenzothiophen, Isothianaphten.

Weiterhin kommen als Comonomere für Monomere der Formel (I) solche der Formel (III) in Betracht.

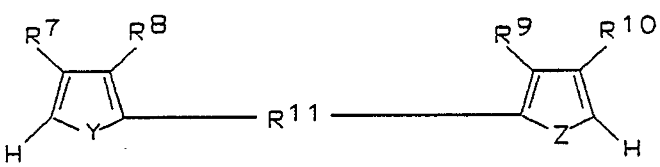

(III),

$R^7$, $R^8$, $R^9$ und $R^{10}$ sind unabhängig voneinander ein Wasserstoffatom, eine $C_1$-$C_{12}$-, vorzugsweise $C_1$-$C_4$ Alkylgruppe; eine Arylgruppe, vorzugsweise Phenyl oder Thienyl oder eine $C_1$-$C_{30}$-, vorzugsweise $C_1$-$C_{12}$-Alkoxygruppe.

Y und Z bedeuten ein Sauerstoffatom, ein Schwefelatom, eine NH-Gruppe, eine N-Alkylgruppe, vorzugsweise N-$C_1$-$C_4$-Alkyl, oder eine N-Arylgruppe, vorzugsweise N-Phenyl.

$R^{11}$ steht für Arylen, vorzugsweise Phenylen, Heteroarylen, vorzugsweise Thienylen, Furanylen, Pyrrolylen oder ein System der Formel $(CH=CH)_p$ mit p = 1,2 oder 3.

Geeignet sind insbesondere 1,2-Di-(2-thienyl)ethen, 1,2-Di-(3-methylthien-2-yl)ethen, 1,2-Di-(2-furanyl)-ethen, 1-(2-Furanyl)-2-(2-thienyl)ethen, 1,4-Di-(2-thienyl)-buta-1,3-dien 1,4-Di-(2-thienyl)benzol, 2,5-Di-(2-thienyl)-thiophen (Terthienyl), 2,5-Di-(2-thienyl)-pyrrol, 2,2′-Dithiophen, 3,3′-Dimethyl-2,2′-bithiophen, 3,3′-Dimethoxy-2,2′-bithiophen, 3,4′-Dimethoxy-2,2′-bithiophen, 4,4′-Dimethoxy-2,2′-bithiophen, 3,3′-Dihexyloxy-2,2′-bithiophen, 4,4′-Didodecyloxy-2,2′-bithiophen, 3-Dodecyloxy-4′-methoxy-2,2′-bithiophen.

Die Menge der Struktureinheiten, die sich von Monomeren der Formel (II) ableiten, beträgt im statistischen Mittel 0 bis 40 mol-%, vorzugsweise 0 bis 10 mol-%. Die sich von Monomeren der Formel (III) ableitenden Struktureinheiten sind im statistischen Mittel zu 0 bis 40 mol-%, vorzugsweise 0 bis 10 mol-% vorhanden.

Weiterhin können die Endgruppen der erfindungsgemäßen Polymeren von Struktureinheiten der Monomeren der Formel (IV) gebildet werden, welche zur Modifizierung des Polymerisationsgrades und der physikalischen Eigenschaften zu den Monomeren der Formel (I) zugesetzt werden können.

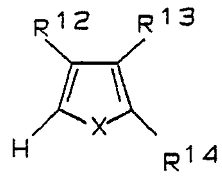

(IV)

$R^{12}$ und $R^{13}$ sind unabhängig voneinander ein Wasserstoffatom, ein Halogenatom, vorzugsweise Chlor oder Brom, eine $C_1$-$C_{12}$-, vorzugsweise $C_1$-$C_4$-Alkylgruppe, eine $C_1$-$C_{30}$-, vorzugsweise $C_1$-$C_{12}$-Alkoxygruppe, eine $C_1$-$C_{12}$-Acylaminogruppe, vorzugsweise Acetylamino, oder eine $C_1$-$C_{12}$-Acyloxygruppe, vorzugsweise Acetyloxy.

$R^{14}$ ist ein Halogenatom, vorzugsweise Chlor oder Brom, eine $C_1$-$C_{12}$-, vorzugsweise $C_1$-$C_4$-Alkylgruppe, eine $C_1$-$C_{30}$-, vorzugsweise $C_1$-$C_{12}$-Alkoxygruppe, eine $C_1$-$C_{12}$-Acylaminogruppe, vorzugsweise Acetylamino, eine $C_1$-$C_{12}$-Acylgruppe, vorzugsweise Acetyl, oder eine $C_1$-$C_{12}$-Acyloxygruppe, vorzugsweise Acetyloxy.

X hat die oben angegebene Bedeutung.

Beispiele für Verbindungen der Formel (IV) sind 2-Bromthiophen, 2-Chlorthiophen, 2-Methylthiophen, 2-Dodecylthiophen, 2-Methoxythiophen, 2-Hexyloxythiophen, 2-Dodecyloxythiophen, 2-Acetylaminothiophen, 2-Brom-3-methoxythiophen, 2-Brom-4-methoxythiophen, 2-Chlor-3-methylthiophen 2,3-Dimethylthiophen, 2,4-Dimethylthiophen 2,3-Dimethoxythiophen, 2,4-Dimethoxythiophen, 3-Methoxy-2-methylthiophen, 3-Hexyloxy-2-methylthiophen, 2-Methoxy-3-methylthiophen, 4-Methoxy-2-methylthiophen, 2-Acetylamino-3-methoxythiophen, 2-Acetylamino-4-methoxythiophen, 2,3,4-Trimethylthiophen, 3,4-Dimethyl-2-methoxythiophen, 2,4-Dimethyl-3-methoxythiophen, 3,4-Dimethyl-2-dodecyloxythiophen, 3,4-Dimethoxy-2-methylthiophen, 2,3,4-Trimethoxythiophen, 2-Acetyl-3,4-dimethoxythiophen, 2-Brompyrrol, 2-Chlorpyrrol, 2-Acetylpyrrol, 2-Chlor-3-methylpyrrol, 2-Brom-3,4-dimethylylpyrrol, 2-Methylfuran, 2-Methoxyfuran, 2,3,4-Trimethylfuran.

Aufgrund der Substitution in der 2-Stellung wirken die Verbindungen der Formel (IV) kettenabbrechend. Ihr Anteil beträgt in der Regel 0 bis 40 mol-%, vorzugsweise weniger als 10 mol-%.

Die vorstehenden Comonomeren der Formeln (II), (III) und (IV) können auch in Mischung untereinander verwendet werden. Die Herstellung der Monomeren der Formel (I) und der Comonomeren der Formeln (II), (III) und (IV) ist aus dem Stand der Technik bekannt oder in der deutschen Patentanmeldung P 38 04 522.2 beschrieben.

Die löslichen, elektrisch leitenden Polymeren enthalten in der oxidierten Form zur Kompensation der positiven Ladungen eine entsprechende Zahl von Anionen. Dabei handelt es sich vorzugsweise um die Anionen des Leitsalzes bzw. des Oxidationsmittels, das beim Herstellungsverfahren eingesetzt wurde. Als Beispiele für geeignete Anionen seien hier geannt: $BF_4^-$, $PF_6^-$, $PO_43^-$, $AsF_6^-$, $SbCl_6^-$, $SO_42^-$, $HSO_4^-$, Alkyl-$SO_3^-$ Perfluoralkyl-$SO_3^-$, Aryl-$SO_3^-$, $F^-$, $Cl^-$, $J3^-$, $FeCl_4^-$, $Fe[(CN)_6]3^-$. Bei Verzicht auf die thermische Stabilität kommen auch $C_3O_4^-$, $JO_4^-$, und $NO_3^-$, in Frage. Bevorzugt sind erfindungsgemäß $BF_4^-$, $PF_6^-$, $CF_3SO_3^-$ und p-Toluolsulfonat. Es können auch Gemische der oben genannten in das Polymere eingebrachten Anionen vorliegen. Die Zahl dieser Anionen, bezogen auf die Zahl der Monomereinheiten, beträgt zumeist 10 bis 30 %, vorzugsweise 15 bis 25 %.

Die Herstellung der erfindungsgemäßen Polymeren erfolgt durch oxidative Polymerisation, vorzugsweise durch elektrochemische (aniodische) Polymerisation der Monomeren.

Die erfindungsgemäßen Polymeren können beispielsweise durch Einwirkung von Elektronenakzeptoren auf die Monomeren der Formel (I), gegebenenfalls zusammen mit Comonomeren der Formeln (II), (III) und (IV) hergestellt werden. Geeignete Oxidationsmittel, die gleichzeitig auch als Dotiermittel für die Polymeren dienen, sind beispielsweise $J_2$, $AsF_5$. $SbCl_5$, $MoCl_5$, $FeCl_3$, $Fe(ClO_4)_3$, $Fe(BF_4)_3$, $Fe(CF_3SO_3)_3$, Fe(III)p-toluolsulfonat und $NO^+$- und $NO_2^+$-Salze, wie $NOBF_4$, $NOPF_6$, $NOAsF_6$, $NOSbF_6$, $NOCF_3SO_3$, $NO_2BF_4$, $NO_2PF_6$ und Aryldiazoniumsalze, wie beispielsweise Benzoldiazoniumtetrafluoroborat.

Das Molverhältnis von Oxidationsmittel zu Monomer beträgt zumeist 2:1 bis 5:1. Wird in Lösung gearbeitet, liegt die Konzentration des Oxidationsmittels im allgemeinen zwischen 0,1 und 1,5 mol pro $dm^3$ Lösemittel.

Zur Modifizierung der Eigenschaften der entstehenden leitenden Polymeren kann die Anwesenheit eines weiteren inerten Salzes bei der Polymerisation von Vorteil sein, da die in diesem Salz enthaltenen

Anionen in das leitende Polymere eingebaut werden können. Genannt seien hier beispielsweise Tetrafluoroborate, Hexafluorophosphate, Hexafluoroarsenate, Hexafluoroantimonate, Hexachloroantimonate, Hydrogensulfate, Perfluoralkylsulfonate, p-Toluolsulfonate, Perchlorate. Bevorzugt sind dabei Tetrafluoroborate, Hexafluorophosphate und Trifluormethansulfonate. Es können auch Gemische dieser Salze verwendet werden. Als Kationen für die Salze sind neben den Erdalkalimetallkationen und H+ insbesondere die Alkalimetallkationen, vorzugsweise $Li^+$ und $Na^+$ geeignet. Als besonders günstig erweisen sich Kationen des Typs $R_4N^+$ bzw. $R_4P^+$, worin die Reste R jeweils unabhängig voneinander Wasserstoff, $C_1$-$C_{12}$-Alkylreste, cycloaliphatische oder aromatische Reste bedeuten. Das Verhältnis der über das Salz zugefügen Anionenäquivalente zu den über das Oxidationsmittel zugefügten Anionenäquivalenten beträgt 0,1 bis 100.

Die chemische Polymerisation kann in der Gasphase oder in der flüssigen Phase des Monomeren sowie in Emulsion oder Suspension erfolgen. In den meisten Fällen ist es jedoch vorteilhaft, ein nicht protisches organische Lösemittel für das Monomere zu verwenden, wie beispielsweise Acetonitril, Nitromethan, Propylencarbonat, Sulfolan, Dichlormethan, Chloroform, Tetrahydrofuran. Es ist nicht nötig, aber von Vorteil, wenn das Oxidationsmittel in dem Lösemittel ebenfalls löslich ist.

Eine Variante des chemischen Polymerisationsverfahrens besteht darin, das Oxidationsmittel in einer Polymermatrix zu lösen oder zu suspendieren und das Monomere über die Gasphase zuzuführen. Die Polymerisation erfolgt dann auf und in der Polymermatrix. Als Matrixpolymere eignen sich die meisten löslichen, filmbildenden Homo- und Copolymeren, wie beispielsweise Polyvinylacetat, Polyvinylalkohol, Polymethylmethacrylat, Ethylen-Vinylacetat-Copolymer. Der Gehalt an Oxidationsmittel in dem Matrixpolymeren beträgt üblicherweise 5 bis 50 Gew.-%.

Die chemische Polymerisation wird vorzugsweise bei Raumtemperatur durchgeführt. Die Temperatur kann allerdings auch in einem größeren Bereich variiert werden, der nach unten durch die Erstarrungstemperatur und nach oben durch die Siedetemperatur oder Zersetzungstemperatur einer der Komponenten begrenzt wird und zumeist im Bereich von -60 bis 80 °C, vorzugsweise -20 bis 50 °C liegt. Die größten Ausbeuten werden im allgemeinen bei einer Temperatur von -10 bis 40 °C erreicht.

Besonders vorteilhaft ist die elektrochemische Herstellung der erfindungsgemäßen Polymeren durch anodische Polymerisation der Monomeren der Formel (I), gegebenenfalls zusammen mit Comonomeren der Formeln (II), (III) oder (IV) in einem Elektrolyt-Lösemittel in Gegenwart eines Leitsalzes.

Die Anode besteht aus einem der üblichen unter den Bedingungen der anodischen Polymerisation beständigen Materialien, vorzugsweise aus Edelmetallen, insbesondere Platin und Gold, oder Kohlenstoff, insbesondere Pyrolysekohlenstoff. Von Bedeutung ist neben dem Anodenmaterial auch die Oberfläche und Geometrie der eingesetzten Anode, da dadurch in erheblichem Maße der Polymerisationsgrad und somit die Eigenschaften der entstehenden Produkte bestimmt werden. So ist es von Vorteil, eine Elektrodenform zu wählen, die eine große Oberfläche mit vielen Hohlräumen bietet. Als besonders geeignet erweisen sich für den erfindungsgemäßen Zweck Anoden, die aufgrund ihrer Geometrie ein großes inneres Volumen umschließen, wie beispielsweise netz-, schwamm-, gewebe-, waben- und filzartige Formen, in deren Hohlräume sich die gebildeten Produkte gut absetzen können. Beispiele hierfür sind ein- und mehrlagige Netze aus Platin oder Platin-Rhodium-Legierungen, Hart- und Weichfilze sowie ein-und mehrlagige Gewebe aus Kohlenstoff-Fasern. Vorzugsweise wird eine Anordnung der Anoden mit paralleler Ausrichtung zur Kathode gewählt. Bei Verwendung von zwei Anoden befinden sich diese in gleichem Abstand vor und hinter der Kathode.

Die Kathode besteht aus einem der üblichen Elektrodenmaterialien wie z.B. Platin, Gold, Nickel, Kupfer, Silber, Graphit oder Glaskohlenstoff, vorzugsweise aus Edelstahl. Sie kann in Form von Platten, Blechen oder Netzen eingesetzt werden und wird im allgemeinen parallel zur Anode angeordnet. Bei Verwendung von zwei Kathoden befinden sich diese in gleichem Abstand vor und hinter der Anode. Um einen Kurzschluß zu verhindern, kann die Kathode über einen Abstandshalter, der z.B. aus einem inerten Kunststoffnetz besteht, von der Anode getrennt werden.

Damit die Abscheidung der erfindungsgemäßen löslichen, elektrisch leitenden Polymeren auf der Anode in guter Ausbeute ermöglicht wird, darf im Gegensatz zu üblichen Elektrolysebedingungen weder stärker gerührt noch stärker geströmt werden. Durch diskontinuierliches Rühren des Elektrolyten bzw. langsame kontinuierliche oder diskontinuierliche Strömung des Elektrolyten oder langsame kontinuierliche oder diskontinuierliche Bewegung der Elektroden kann der ansonsten diffusionskontrollierte Stofftransport der Monomeren an die Anode unterstützt werden. Die Strömungsgeschwindigkeit des Elektrolyten relativ zur Anode ist im allgemeinen kleiner als 1 cm/s zu wählen. Die oben beschriebenen voluminösen Anoden, die ein großes Raumelement des Elektrolyten umschließen, begünstigen den Stofftransport infolge der kurzen Diffusionswege und ermöglichen gegebenenfalls eine Reaktionsführung vollständig ohne Rühren bzw. Strömen.

Die elektrochemische Polymerisation der Monomeren bzw. der Monomer-Mischungen wird in einem der

üblichen Elektrolyt-Lösemittelsysteme durchgeführt, die unter den Bedingungen der elektrochemischen Polymerisation beständig sein und eine ausreichende Löslichkeit für Monomer und Leitsalz aufweisen müssen. Vorzugsweise finden dipolar aprotische Lösemittel wie beispielsweise Acetonitril, Benzonitril, Propylencarbonat, Nitromethan und Schwefeldioxid sowie Mischungen dieser Lösemittel, gegebenenfalls auch mit anderen unter den Bedingungen der elektrochemischen Polymerisation stabilen Lösemitteln, wie beispielsweise Dimethylformamid, N-Methylpyrrolidinon, Dimethylsulfoxid, Dichlormethan und Tetrahydrofuran Verwendung. Ein Zusatz von weniger als fünf Prozent eines polar protischen Lösemittels, wie Wasser, Methanol oder der dem Leitsalz zugrunde liegenden Säure kann zuweilen von Vorteil sein.

Als Leitsalze, die dem Ladungstransport während der elektrochemischen Polymerisation dienen und deren Anionen in die Polymeren eingebaut werden und die Eigenschaften der Polymeren wie Thermostabilität, Löslichkeit und elektrische Leitfähigkeit beeinflussen können, finden die an sich üblichen Verbindungen Verwendung. Genannt seien hier beispielsweise Tetrafluoroborate, Hexafluorophosphate, Hexafluoroarsenate, Hexafluoroantimonate, Hexachloroantimonate, Hydrogensulfate, Perfluoralkylsulfonate, p-Toluolsulfonate, Perchlorate. Bevorzugt sind dabei Tetrafluoroborate, Hexafluorophosphate und Trifluormethansulfonate. Es können auch Gemische dieser Leitsalze verwendet werden.

Als Kationen für die Leitsalze sind neben den Erdalkalimetallkationen und $H^+$ insbesondere die Alkalimetallkationen, vorzugsweise $Li^+$ und $Na^+$ geeignet. Als besonders günstig erweisen sich Kationen des Typs $R_4N^+$ bzw. $R_4P^+$, worin die Reste R jeweils unabhängig voneinander Wasserstoff, $C_1$-$C_{12}$-Alkylreste, cycloaliphatische oder aromatische Reste bedeuten. Die Menge an Leitsalz liegt im allgemeinen zwischen 0,01 und 1 mol, vorzugsweise 0,05 und 0,5 mol pro $dm^3$ Lösemittel.

Die Monomerkonzentration, die Bedeutung besitzt für den Polymerisationsgrad der erfindungsgemäßen Polymeren, beträgt 0,01 bis 5 mol, vorzugsweise 0,05 bis 1 mol Monomere pro $dm^3$ Elektrolyt-Lösemittel. Bei Comonomer-Mischung ist der Anteil der Monomeren nach Formel (I) im allgemeinen größer als 60 mol-%, vorzugsweise größer als 80 mol-% und insbesondere größer als 95 mol-%, bezogen auf die Gesamtmenge an Monomeren.

Die elektrochemische Polymerisation wird vorzugsweise bei Raumtemperatur durchgeführt. Die Temperatur kann allerdings auch in einem größeren Bereich variiert werden, der nach unten durch die Erstarrungstemperatur und nach oben durch die Siedetemperatur des Elektrolyt-Lösemittelsystems begrenzt wird und zumeist im Bereich von -60 bis 80 °C, vorzugsweise -20 bis 50 °C liegt. Die größten Ausbeuten werden im allgemeinen bei einer Temperatur von -10 bis 40 °C erreicht.

Die Dauer der Elektrolyse hängt ab von dem verwendeten Elektrolyt-System, den jeweiligen Elektrolyse-Bedingungen und insbesondere der eingesetzten Menge der Monomeren. Üblicherweise beträgt die Elektrolysedauer 1 bis 12 Stunden, vorzugsweise 2 bis 8 Stunden.

Die elektrochemische Polymerisation kann in den üblichen Zellen oder Elektrolyse-Apparaturen durchgeführt werden. Gut geeignet sind beispielsweise einfache Elektrolyse-Apparaturen, bestehend aus einer ungeteilten Zelle, zwei oder mehr Elektroden und einer externen Strom-Spannungsquelle. Es können aber auch geteilte Zellen mit Diaphragmen oder Ionenaustauschermembranen oder solche mit Referenzelektroden zur exakten Potentialbestimmung eingesetzt werden. Die Messung des Stromverbrauchs ist zweckmäßig, da dies eine Abschätzung der bereits verbrauchten Monomermenge ermöglicht. Eine Elektrolyse-Apparatur, bei der die Kathode flächig am Boden ausgebildet ist und die Anode in Form eines Bandes mit konstantem Vorschub durch den Elektrolyt geführt wird oder in Form eines nur teilweise in den Elektrolyten eintauchenden Zylinders langsam rotiert, ermöglicht eine kontinuierliche Verfahrensführung.

Als Strom-Spannungsquelle für den Betrieb der elektrolytischen Zelle, in der das erfindungsgemäße Verfahren durchgeführt wird, eignet sich jede Gleichstrom-Spannungsquelle, die eine hinreichend hohe elektrische Spannung liefert. Üblicherweise wird die elektrochemische Polymerisation mit einer Spannung von 0,1 bis 100 Volt, vorzugsweise im Bereich von 1,5 bis 30 Volt betrieben. Für die Stromdichte haben sich Werte im Bereich von 0,0002 bis 50 $mA/cm^2$, vorzugsweise im Bereich von 0,001 bis 10 $mA/cm^2$ spezifischer Anodenoberfläche als günstig und vorteilhaft erwiesen.

Zur Isolierung und Reinigung der löslichen Polymeren werden die Rohprodukte der chemischen bzw. elektrochemischen Polymerisation (ggf. mitsamt der als Träger dienenden Anode) durch Waschen mit Lösemitteln, in denen die jeweiligen Polymeren unlöslich sind, wie Wasser, Methanol, Ethanol, ggf. Acetonitril und Pentan von Leitsalzen, Monomeren und anhaftenden Verunreinigungen befreit. Anschließend werden die vorgereinigten Produkte (ggf. mit dem Träger) in einem Lösemittel digeriert, in dem die erfindungsgemäßen leitenden Polymeren löslich sind. Eventuell in der Lösung suspendierte Verunreinigungen werden mittels bekannter Methoden wie Filtrieren, Zentrifugieren und Dekantieren abgetrennt und die reinen Polymeren dann durch Abdampfen des Lösemittels erhalten. Nach dem erfindungsgemäßen Verfahren sind Ausbeuten von etwa 50 bis 80 % möglich.

Im Gegensatz zu den elektrisch leitenden Polymeren in Pulver- oder Filmform, die durch chemische

bzw. elektrochemische Oxidation von substituierten Thiophenderivaten erhalten werden, sind die erfindungsgemäßen Polymeren insbesondere auch in der oxidierten, d.h. elektrisch leitenden Form mit einem Dotierungsgrad von mindestens 10 % in vielen organischen Lösemitteln vollständig und reversibel löslich und unterscheiden sich duch ihre Struktur, ihre Eigenschaften sowie durch ihre Verwendungsmöglichkeiten von den bisher bekannten leitenden Polymeren.

Als Lösemittel für die erfindungsgemäßen Polymeren eignen sich übliche organische Lösemittel oder Lösemittelgemische, die als Lösemittelparameter nach Hansen (vgl. Barton, Handbook of Solubility Parameters and other Cohesion Parameters, CRC Press, 1983, Seite 153-161) einen δp-wert kleiner 8,5 $(cal/ccm)^{1/2}$ und einen δH-wert kleiner 6,5 $(cal/ccm)^{1/2}$ nach Hansen aufweisen, wie Toluol, Xylol, Tetrahydronaphthalin, Chlorbenzol, Dichlormethan, Chloroform, 1,2-Dichlorethan, 1,1,1-Trichlorethan, Trichlorethen, Tetrachlorethen, Diethylether, Diisopropylether, t-Butylmethylether, Tetrahydrofuran, 2-Methyltetrahydrofuran, Methylethylketon, Diethylketon, Methylisobutylketon, Diisopropylketon, Diisobutylketon, Diethylamin, Diisopropylamin, Butylacetat, vorzugsweise Toluol, o-Xylol, Dichlormethan, t-Butylmethylether, Tetrahydrofuran, 2-Methyltetrahydrofuran, Methylisobutylketon und Diisobutylketon. Bei Lösemittelgemischen, die auch Nichtlöser enthalten können, sind die resultierenden δ-Werte nach der in der Literatur angegebenen Weise zu berechnen. Vorzugsweise werden Lösemittel oder Lösemittelgemische eingesetzt, deren δp-Wert kleiner 5,5 $(cal/ccm)^{1/2}$ und deren δH-wert kleiner 5,0 $(cal/ccm)^{1/2}$ ist. Nachstehend die Werte einiger geeigneter Lösemittel (die δ-Werte sind in Barton, Handbook of Solubility Parameters and other Cohesion Parameters, CRC Press, 1983, Seite 153-161, aufgeführt.):

| | δ-p $(cal/ccm)^{1/2}$ | δ-H $(cal/ccm)^{1/2}$ |
|---|---|---|
| Toluol | 0,7 | 1,0 |
| o-Xylol | 0,5 | 1,5 |
| Dichlormethan | 3,1 | 3,0 |
| 1,1,1-Trichlorethan | 2,1 | 1,0 |
| Diethylether | 1,4 | 2,5 |
| Tetrahydrofuran | 2,8 | 3,9 |
| Methylisobutylketon | 3,0 | 2,0 |
| Diisobutylketon | 1,8 | 2,0 |
| Butylacetat | 1,8 | 3,1 |

Je nach Lösemittel können mindestens 0,1 g, vorzugsweise mindestens 1,0 g elektrisch leitende Polymere in 100 $cm^3$ Lösemittel gelöst werden.

Die elektrische Leitfähigkeit der löslichen Polymeren beträgt $10^{-4}$ bis 100 S/cm, vorzugsweise $10^{-3}$ bis 10 S/cm.

Das UV/VIS/NIR-Spektrum der Polymeren zeigt eine intensive Absorption im Bereich von 400 bis 3200 nm, vorzugsweise im Bereich von 500 bis 1800 nm. Die thermische Stabilität der erfindungsgemäßen Polymeren ist hoch. Dies zeigt sich beispielsweise daran, daß erst bei einer Temperatur oberhalb 200 °C eine Verringerung des Gewichts um 10 % auftritt.

Die besonderen Eigenschaften, durch die sich die erfindungsgemäßen Polymeren von den bekannten leitenden Polymeren unterscheiden, ermöglichen ihren Einsatz auch für Anwendungen, für die eine Löslichkeit und damit Verarbeitbarkeit notwendig oder von Vorteil ist. Genannt seien hier das Einmischen in handelsübliche Polymere oder das Aufbringen elektrisch leitender Schichten, ggf. definierter Dicke auf leitende und nicht leitende Materialien. Durch diese Verfahren kann die Herstellung von Katalysatoren, elektrischen Schaltern, Halbleiter-Bauteilen, Solarzellen, Abschirmmaterialien, Tarnanstrichen, Flächenheizleitern, Spezialelektroden und insbesondere von leitenden und antistatischen Folien und Fasern ermöglicht oder vereinfacht werden.

Die Erfindung wird durch die nachfolgenden Beispiele näher erläutert. Die in den Beispielen angegebenen Teile und Prozente beziehen sich, sofern nicht anders vermerkt, auf das Gewicht. Die spezifische Leitfähigkeit wurde mittels Vierpunktmessung an Preßlingen bestimmt. Das thermische Zersetzungsverhalten wurde durch Differentialthermogravimetrie (DTG) und Differentialscanningkalorimetrie (DSC) bestimmt. Die in den Beispielen erhaltenen gereinigten Polymeren waren in Tetrahydrofuran bei 25 °C zu mehr als 1,0 g je 100 $cm^3$ löslich. Lösungen in Tetrahydrofuran zeigten im UV/VIS/NIR-Spektrum eine intensive Absorption zwischen 500 und 1800 nm. Die mittlere Molmasse (Gewichtsmittel) der erfindungsgemäßen Polymeren wurden an der neutralen (undotierten) Form, die beispielsweise durch elektrochemische Reduktion an einer Platin-Kathode bei 0,3 V (vs. Ag/AgCl) erhalten wurde, mittels Gelpermeationschromatographie

(GPC) gegen Polystyrol als Standard bestimmt.

**Beispiel 1**

4,34 Teile Tetraethylammoniumtetrafluoroborat, 4,53 Teile 3-Nonyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Kohlenstoff-Filz (Flächengewicht 0,4 $kg/m^2$, spez. Oberfläche (BET) ca. 1,5 $m^2/g$) von 60 mm Länge, 55 mm Breite und 4 mm Dicke eingesetzt. Die Anode wurde in einem Abstand von 2 cm parallel zur Kathode befestigt, getrennt über einen Abstandshalter aus Polypropylen-Netz. Bei einer Elektrolysetemperatur von 20 °C und einem Anodenstrom von 100 mA erhielt man eine Zellenspannung von 3 bis 6 Volt. Nach der Hälfte der theoretisch benötigten Strommenge wurde die mit den Polymeren beladene Anode gegen eine neue ausgetauscht und nach Verbrauch der theoretischen Strommenge wurde die Elektrolyse beendet. Die mit dem Rohprodukt beladenen Anoden wurden nach dem Trocknen in ein Bad mit Hexan gestellt und dort mehrfach längere Zeit digeriert. Nach dem Trocknen wurden die mit den Polymeren beladenen Kohlefilze in einem Bad mit Tetrahydrofuran solange digeriert, bis die Polymeren praktisch vollständig in Lösung gegangen waren. Die Lösung wurde über einen Glasfiltertiegel der Porengröße G3 filtriert und das Filtrat im Rotationsverdampfer zur Trockene eingeengt. Das Rohprodukt wurde mechanisch zerkleinert, mit Wasser gewaschen, getrocknet, mit Pentan gewaschen und erneut getrocknet. Es wurden 1,52 Teile eines blauschwarz glänzenden Feststoffs erhalten. Die Elementaranalyse lieferte folgende Werte 64,3 % C, 8,4 % H, 13,8 % S, 5,4 % F. Ein Pulverpreßling des gemahlenen Produkts besaß eine spezifische Leitfähigkeit von $4{,}8 \cdot 10^{-3}$ S/cm. Bei der DTG wurde bis 220 °C ein Gewichtsverlust von weniger als 10 % beobachtet. Die GPC der undotierten Form ergab eine mittlere Molmasse von ca. 4500.

**Beispiel 2**

4,34 Teile Tetraethylammoniumtetrafluoroborat, 5,36 Teile 3-Dodecyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20 °C und einem Anodenstrom von 50 mA erhielt man eine Zellenspannung von 3 bis 6 Volt. Nach Verbrauch eines Viertels der theoretisch benötigten Strommenge wurde das auf der Anode abgeschiedene Polymere mechanisch abgetrennt und die Anode erneut eingesetzt. Dieses Verfahren wurde bis zum Verbrauch der theoretisch benötigten Strommenge wiederholt. Das gesammelte Rohprodukt wurde mechanisch zerkleinert, mit Wasser gewaschen, getrocknet, mit Pentan und Acetonitril gewaschen und erneut getrocknet. Das Produkt wurde in Tetrahydrofuran aufgenommen, über einen Glasfiltertiegel der Porengröße G3 filtriert und das Filtrat im Rotationsverdampfer zur Trockene eingeengt. Es wurden 1,88 Teile eines blauschwarz glänzenden Feststoffs erhalten. Die Elementaranalyse lieferte folgende Werte: 65,7 % C, 9,0 % H; 11,1 % S, 5,3 % F. Ein Pulverpreßling des gemahlenen Produkts besaß eine spezifische Leitfähigkeit von $1{,}5 \cdot 10^{-2}$ S/cm. Bei der DTG wurde bis 255 °C ein Gewichtsverlust von weniger als 10 % beobachtet. Die DSC zeigte ein Maximum bei 350 °C (130 J/g). Die GPC der undotierten Form ergab eine mittlere Molmasse von ca. 5400.

**Beispiel 3**

4,34 Teile Tetraethylammoniumtetrafluoroborat, 5,93 Teile 3-Tetradecyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20 °C und einem Anodenstrom von 50 mA erhielt man eine Zellenspannung von 3 bis 6 Volt. Nach Verbrauch eines Viertels der theoretisch benötigten Strommenge wurde das auf der anode abgeschiedene Polymere mechanisch abgetrennt und die Anode erneut eingesetzt. Dieses Verfahren wurde bis zum Verbrauch der theoretisch benötigten Strommenge wiederholt. Das gesammelte Rohprodukt wurde mechanisch zerkleinert, mit Wasser gewaschen, getrocknet, mit Pentan und Acetonitril gewaschen und erneut getrocknet. Das Rohprodukt wurde in Tetrahydrofuran aufgenommen, über einen Galsfiltertiegel der Porengröße G3 filtriert und das Filtrat im Rotationsverdampfer zur Trockene eingeengt. Es wurden 2,04 Teile eines blauschwarz glänzenden Feststoffs erhalten. Die

Elementaranalyse lieferte folgende Werte: 67,5 % C, 10,0 % H, 10,1 % S, 4,8 % F. Ein Pulverpreßling des gemahlenen Produkts besaß eine spezifische Leitfähigkeit von $1{,}0 \cdot 10^{-2}$ S/cm.

**Beispiel 4**

3,0 Teile Eisen(III)chlorid (wasserfrei) wurden in 100 Teilen Acetonitril gelöst. Unter Rühren wurden 1,0 Teile 3-Dodecyloxythiophen zugefügt. Nach 6 h Rühren bei Raumtemperatur war das Polymer vollständig ausgefallen, wurde abfiltriert und mit Acetonitril gewaschen. Das Rohprodukt wurde in THF aufgenommen, über einen Glasfiltertiegel der Porengröße G3 filtriert und das Filtrat im Rotationsverdampfer zur Trockene eingeengt. Der Rückstand wurde mit Pentan und Wasser gewaschen und getrocknet. Es wurden 0,7 Teile eines blauschwarz glänzenden Feststoffs erhalten. Die Elementaranalyse lieferte folgende Werte 61,4 % C, 8,1 % H, 9,9 % S, 10,1 % Cl, 4,4 % Fe, auf GPC (der undotierten Form) bestrecken die Polymeren zu über 90 % aus 10-40 Monomereinheiten. Ein Pulverpressling des gemahlenen Produkts besaß eine Leitfähigkeit von $4 \cdot 10^{-4}$ S/cm. Bei der DTG wurde bis 200°C ein Gewichtsverlust von weniger als 10 % beobachtet.

**Beispiele 5-9**

4,34 Teile Tetraethylammoniumtetrafluoroborat, das 3-Alkoxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein 8 lagiges Netz von 60 mm Länge und 55 mm Breite aus Platin/Rhodium(95:5)-Draht von 0,07 mm Durchmesser eingesetzt. Bei einer Elektrolysetemperatur von 20°C und einem Anodenstrom von 100 mA erhielt man eine Zellenspannung von 3 bis 6 Volt. Nach Verbrauch der theoretisch benötigten Strommenge wurde das auf der Anode abgeschiedene Polymere mit Dichlormethan von der Anode abgelöst. Die Lösung wurde über einen Glasfiltertiegel der Porengröße G3 filtriert und das Filtrat im Rotationsverdampfer zur Trockene eingeengt. Das Rohprodukt wurde mechanisch zerkleinert, mit Wasser gewaschen, getrocknet, mit Acetonitril und Hexan digeriert, anschließend abfiltriert und getrocknet.

| Monomer | Einwaage | Auswaage | elektrische Leitfähigkeit |
|---|---|---|---|
| 3-Octyloxythiophen | 4,24 Teile | 0,17 Teile | $2 \cdot 10^{-3}$ S/cm |
| 3-Decyloxythiophen | 4,80 Teile | 1,10 Teile | $3 \cdot 10^{-3}$ S/cm |
| 3-Undecyloxythiophen | 5,08 Teile | 0,51 Teile | $3 \cdot 10^{-3}$ S/cm |
| 3-Tridecyloxythiophen | 5,44 Teile | 1,10 Teile | $2 \cdot 10^{-3}$ S/cm |
| 3-Pentadecyloxythiophen | 6,21 Teile | 0,28 Teile | $1 \cdot 10^{-3}$ S/cm |

Die Polymeren sind in der oxidischen (dotierten) Form u.a. in Dichlormethan, Tetrahydrofuran und Toluol löslich.

**Ansprüche**

1. Intrinsisch elektrisch leitendes Polymeres in der neutralen (nicht leitenden) und oxidierten (dotierten) Form, mit Struktureinheiten, die durch Verknüpfung in 2-Stellung und/oder 5-Stellung miteinander verbunden sind, im statistischen Mittel bestehend aus

60 bis 100 mol-% Struktureinheiten, die sich von mindestens einem Monomeren der Formel (I) ableiten

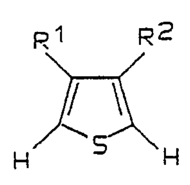

(I),

worin

$R^1$ eine geradkettige oder verzweigte $C_6$-$C_{30}$-Alkoxygruppe und
$R^2$ ein Wasserstoffatom oder eine $C_1$-$C_{30}$-Alkoxygruppe darstellen,
0 bis 40 mol-% Struktureinheiten, die sich von mindestens einem Monomeren der Formel (II) ableiten

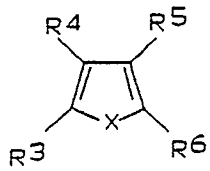

(II),

worin
$R^4$ und $R^5$ unabhängig voneinander ein Wasserstoffatom, ein Halogenatom, eine $C_1$-$C_{12}$-Alkylgruppe, Alkoxyalkyl, Arylmethyl, Aryl, eine $C_1$-$C_4$-Alkoxygruppe oder $O(CH_2CH_2O)_nCH_3$ mit n = 1 bis 4, bedeuten oder zusammen mit den sie verbindenden C-Atomen einen aromatischen Ring bilden,
$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten

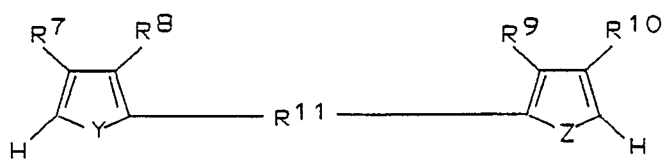

(III),

worin
$R^7$, $R^8$, $R^9$ und $R^{10}$ unabhängig voneinander ein Wasserstoffatom, eine $C_1$-$C_{12}$-Alkylgruppe, eine Arylgruppe oder eine $C_1$-$C_{30}$-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
$R^{11}$ eine Arylengruppe, eine Heteroarylengruppe oder ein konjugiertes System der Formel $(-CH=CH-)_p$, worin p null, 1, 2 oder 3 ist, bedeutet,
0 bis 40 mol-% Struktureinheiten, die sich von mindestens einer Verbindung der Formel (IV) ableiten

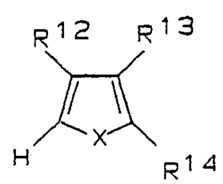

(IV)

worin
$R^{12}$ und $R^{13}$ unabhängig voneinander ein Wasserstoffatom, ein Halogenatom, eine $C_1$-$C_{12}$-Alkylgruppe eine $C_1$-$C_{30}$-Alkoxygruppe, eine $C_1$-$C_{12}$-Acylaminogruppe oder eine $C_1$-$C_{12}$-Acyloxygruppe,
$R^{14}$ ein Halogenatom, eine $C_1$-$C_{12}$-Alkylgruppe, eine $C_1$-$C_{30}$-Alkoxygruppe, eine $C_1$-$C_{12}$-Acylaminogruppe, eine $C_1$-$C_{12}$-Acylgruppe oder eine $C_1$-$C_{12}$-Acyloxygruppe bedeuten und
X die oben angegebene Bedeutung hat.

2. Intrinsisch elektrisch leitendes Polymeres nach Anspruch 1, dadurch gekennzeichnet, daß es im statistischen Mittel aus 90 bis 100 mol-% Struktureinheiten besteht, die sich von einem Monomeren der Formel (I) ableiten.

3. Intrinsisch elektrisch leitendes Polymeres nach Anspruch 1, dadurch gekennzeichnet, daß das Polymere in der oxidierten Form in einem organischen Lösemittel,das als Lösemittelparameter nach Hansen einen p-δWert kleiner 8,5 $(cal/ccm)^{1/2}$ und einen δH-Wert kleiner 6,5 $(cal/ccm)^{1/2}$ aufweist, bei 25 °C vollständig löslich ist und Lösungen mit einem Gehalt von mindestens 0,1 g des Polymeren in 100 $cm^3$ des Lösemittels bei 25 °C erhalten werden können.

4. Intrinsisch elektrisch leitendes Polymeres nach Anspruch 1, dadurch gekennzeichnet, daß Lösungen mit einer Konzentration von mindestens 1 g des Polymeren in 100 $cm^3$ eines organischen Lösemittels, das als Lösemittelparameter nach Hansen einen δp-Wert kleiner 5,5 $(cal/ccm)^{1/2}$ und einen δH-Wert kleiner 5,0 $(cal/ccm)^{1/2}$ aufweist, bei 25 °C erhalten werden können.

5. Intrinsisch elektrisch leitendes Polymeres nach Anspruch 1, dadurch gekennzeichnet, daß es aus acht bis 150 Struktureinheiten besteht.

6. Intrinsisch elektrisch leitendes Polymeres nach Anspruch 1, dadurch gekennzeichnet, daß wenigstens eine der beiden Endgruppen aus einer Struktureinheit besteht, die sich von Verbindungen der Formel (IV) ableiten

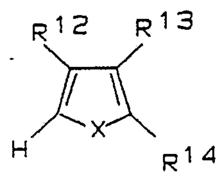

(IV)

worin

$R^{12}$ und $R^{13}$ unabhängig voneinander ein Wasserstoffatom, ein Halogenatom, eine $C_1$-$C_{12}$-Alkylgruppe oder eine $C_1$-$C_{12}$-Alkoxygruppe sind,

$R^{14}$ ein Halogenatom, eine $C_1$-$C_{12}$-Acylgruppe, eine $C_1$-$C_{12}$-Acyloxygruppe oder eine $C_1$-$C_{12}$-Alkoxygruppe ist und

X die in Anspruch 1 angegebene Bedeutung hat.

7. Intrinsisch elektrisch leitendes Polymeres nach Anspruch 1, dadurch gekennzeichnet, daß in Formel (I) $R^1$ eine geradkettige oder verzweigte $C_8$-$C_{22}$-Alkoxygruppe und $R^2$ ein Wasserstoffatom ist.

8. Verfahren zur Herstellung des intrinsisch elektrisch leitenden Polymeren nach Anspruch 1 durch oxidative Polymerisation von mindestens einem Monomeren der Formel (I), gegebenenfalls zusammen mit einem oder mehreren Comonomeren der Formeln (II), (III) oder (IV).

9. Verfahren nach Anspruch 7, dadurch gekennzeichnet, daß ein chemisches Oxidationsmittel verwendet wird.

10. Verfahren nach Anspruch 7, dadurch gekennzeichnet, daß als Oxidationsmittel ein $Fe^{3+}$-Salz verwendet wird in Gegenwart eines weiteren Salzes aus der Gruppe der Tetrafluoroborate, Hexafluorophosphate und Trifluormethansulfonate.

11. Verfahren nach Anspruch 7, dadurch gekennzeichnet, daß als Oxidationsmittel ein in einer Polymermatrix gelöstes oder suspendiertes $Fe^{3+}$-Salz verwendet wird und das Monomere über die Gasphase mit dem Oxidationsmittel in Kontakt gebracht wird.

12. Verfahren nach Anspruch 7, dadurch gekennzeichnet, daß die Polymerisation elektrochemisch durch anodische Oxidation in einem Elektrolyt-Lösemittel in Gegenwart eines Leitsalzes erfolgt.

13. Verfahren nach Anspruch 7, dadurch gekennzeichnet, daß die Anode bei der elektrochemischen Polymerisation aus einem Edelmetall oder Kohlenstoff besteht und Netz-, Schwamm-, Gewebe-, Waben- oder Filz-Struktur besitzt.

14. Verfahren nach Anspruch 7, dadurch gekennzeichnet, daß bei der elektrochemischen Polymerisation als Leitsalz Tetrafluoroborate, Hexafluorophosphate oder Trifluormethansulfonate eingesetzt werden.

15. Verwendung des intrinsisch elektrisch leitenden Polymeren nach Anspruch 1 zum Einmischen in Kunststoff sowie zur Beschichtung von elektrisch leitenden oder nicht leitenden Materialien zwecks Herstellung von Katalysatoren, elektrischen Schaltern, Halbleiter-Bauteilen, Solarzellen, Abschirmmaterialien, Tarnanstrichen, Flächenheizleitern, Spezialelektroden sowie antistatischen Folien oder Fasern.

Patentansprüche für folgenden Vertragsstaat: ES und GR

1. Verfahren zur Herstellung eines intrinsisch elektrisch leitenden Polymeren in der neutralen (nicht leitenden) und oxidierten (dotierten) Form, mit Struktureinheiten, die durch Verknüpfung in 2-Stellung und/oder 5-Stellung miteinander verbunden sind, im statistischen Mittel bestehend aus
60 bis 100 mol-% Struktureinheiten, die sich von mindestens einem Monomeren der Formel (I) ableiten

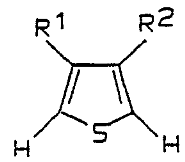

(I),

worin
$R^1$ eine geradkettige oder verzweigte $C_6$-$C_{30}$-Alkoxygruppe und
$R^2$ ein Wasserstoffatom oder eine $C_1$-$C_{30}$-Alkoxygruppe darstellen,
0 bis 40 mol-% Struktureinheiten, die sich von mindestens einem Monomeren der Formel (II) ableiten

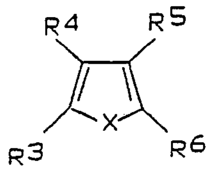

(II),

worin
$R^4$ und $R^5$ unabhängig voneinander ein Wasserstoffatom, ein Halogenatom, eine $C_1$-$C_{12}$-Alkylgruppe, Alkoxyalkyl, Arylmethyl, Aryl, eine $C_1$-$C_4$-Alkoxygruppe oder $-O(CH_2CH_2O)_nCH_3$ mit n = 1 bis 4, bedeuten oder zusammen mit den sie verbindenden C-Atomen einen aromatischen Ring bilden,
$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten

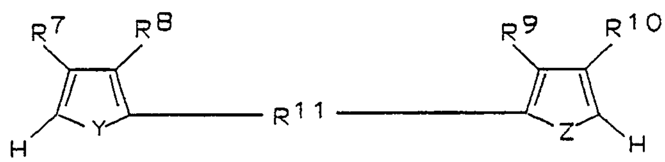

(III),

worin
$R^7$, $R^8$, $R^9$ und $R^{10}$ unabhängig voneinander ein Wasserstoffatom, eine $C_1$-$C_{12}$-Alkylgruppe eine Arylgruppe oder eine $C_1$-$C_{30}$-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
$R^{11}$ eine Arylengruppe, eine Heteroarylengruppe oder ein konjugiertes System der Formel $(-CH=CH-)_p$, worin p null, 1, 2 oder 3 ist, bedeutet,
0 bis 40 mol-% Struktureinheiten, die sich von mindestens einer Verbindung der Formel (IV) ableiten

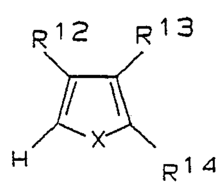

(IV)

worin
$R^{12}$ und $R^{13}$ unabhängig voneinander ein Wasserstoffatom, ein Halogenatom, eine $C_1$-$C_{12}$-Alkylgruppe, eine $C_1$-$C_{30}$-Alkoxygruppe, eine $C_1$-$C_{12}$-Acylaminogruppe oder eine $C_1$-$C_{12}$-Acyloxygruppe,
$R^{14}$ ein Halogenatom, eine $C_1$-$C_{12}$-Alkylgruppe, eine $C_1$-$C_{30}$-Alkoxygruppe, eine $C_1$-$C_{12}$-Acylaminogruppe, eine $C_1$-$C_{12}$-Acylgruppe oder eine $C_1$-$C_{12}$-Acyloxygruppe bedeuten und
X die oben angegebene Bedeutung hat, durch oxidative Polymerisation von mindestens einem Monomeren der Formel (I), gegebenenfalls zusammen mit einem oder mehreren Comonomeren der Formeln (II), (III) oder (IV).

2. Verfahren nach Anspruch 1, dadurch gekennzeichnet, daß ein chemisches Oxidationsmittel verwendet wird.

3. Verfahren nach Anspruch 1, dadurch gekennzeichnet, daß als Oxidationsmittel ein $Fe^{3+}$-Salz verwendet wird in Gegenwart eines weiteren Salzes aus der Gruppe der Tetrafluoroborate, Hexafluorophosphate und Trifluormethansulfonate.

4. Verfahren nach Anspruch 1, dadurch gekennzeichnet, daß als Oxidationsmittel ein in einer Polymermatrix gelöstes oder suspendiertes $Fe^{3+}$-Salz verwendet wird und das Monomere über die Gasphase mit dem Oxidationsmittel in Kontakt gebracht wird.

5. Verfahren nach Anspruch 1, dadurch gekennzeichnet, daß die Polymerisation elektrochemisch durch anodische Oxidation in einem Elektrolyt-Lösemittel in Gegenwart eines Leitsalzes erfolgt.

6. Verfahren nach Anspruch 1, dadurch gekennzeichnet, daß die Anode bei der elektrochemischen Polymerisation aus einem Edelmetall oder Kohlenstoff besteht und Netz-, Schwamm-, Gewebe-, Waben- oder Filz-Struktur besitzt.

7. Verfahren nach Anspruch 1, dadurch gekennzeichnet, daß bei der elektrochemischen Polymerisation als Leitsalz Tetrafluoroborate, Hexafluorophosphate oder Trifluormethansulfonate eingesetzt werden.

8. Verwendung des nach Anspruch 1 hergestellten intrinsisch elektrisch leitenden Polymeren zum Einmischen in Kunststoff sowie zur Beschichtung von elektrisch leitenden oder nicht leitenden Materialien zwecks Herstellung von Katalysatoren, elektrischen Schaltern, Halbleiter-Bauteilen, Solarzellen, Abschirmmaterialien, Tarnanstrichen, Flächenheizleitern, Spezialelektroden sowie antistatischen Folien oder Fasern.

Europäisches Patentamt

# EUROPÄISCHER RECHERCHENBERICHT

Nummer der Anmeldung

EP 89102010.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 711 742 (JEN et al.)<br>* Ansprüche; Spalte 4, Zeile 30 - Spalte 5, Zeile 45; Spalte 6, Zeile 44 - Spalte 8, Zeile 49; Beispiele 1,11 * | 1-5,7-10,12,14,15 | H 01 B 1/12<br>//C 08 L 45:00 |
| D | & EP-A1-0 203 438<br>---- | | |

RECHERCHIERTE SACHGEBIETE (Int. Cl.4)

H 01 B 1/00
C 25 B 3/00
C 08 L 45/00

Der vorliegende Recherchenbericht wurde für alle Patentansprüche erstellt.

| Recherchenort | Abschlußdatum der Recherche | Prufer |
|---|---|---|
| WIEN | 09-05-1989 | KUTZELNIGG |

KATEGORIE DER GENANNTEN DOKUMENTEN

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82